# EUROPEAN PATENT APPLICATION

(11) **EP 4 535 153 A1**
(43) Date of publication of application: **09.04.2025**
(21) Application number: 24178399.2
(22) Date of filing: 28.05.2024
(51) Int. Cl.: G06F 3/06, G06F 13/16, H04L 1/20

(54) **STORAGE DEVICE AND STORAGE SYSTEM INCLUDING THE SAME**

(30) Priority: 06.10.2023 KR 20230133411
(71) Applicant: Samsung Electronics Co., Ltd., Suwon-si, Gyeonggi-do 16677 (KR)
(72) Inventor: LEE, Haeri, Suwon-si (KR); KIM, Haekyung, Suwon-si (KR); KIM, Jaesub, Suwon-si (KR); WANG, Hongmoon, Suwon-si (KR)
(74) Representative: Marks & Clerk LLP

(57) **Abstract**

A storage system may include a host device, and a storage device. The storage device may be configured to, being powered-on, perform an eye open monitor (EOM) operation with respect to a signal received from the host device to generate an EOM result value, configured to store the EOM result value in a buffer memory, and configured to output the EOM result value in the buffer memory to the host device in response to receiving an asynchronous event request (AER) command from the host device.

## Description

### 1. Field

The invention generally relates to a storage system and to a method of operating a storage system.

### 2. Background

Recently, interest in high-speed transmission systems capable of high-speed data transmission is increasing. The waveform of data is affected by bandwidth limitations while a signal passes through a transmission channel such as a cable, a printed circuit board, or an optical fiber.

An eye open monitor (EOM) is used to identify the quality characteristics of signals transmitted and received on a channel. For example, an eye of a signal received at a signal reception end in a storage device may be measured. Meanwhile, as data capacity increases and data transmission speed increases, time required to measure the eye of a signal may become a major cause of limiting the data transmission speed.

### SUMMARY

Example embodiments of the disclosure provide a storage device having an enhanced quality of signals and a storage system including the same.

According to an aspect of an example embodiment, a storage system may include a host device, and a storage device configured to, being powered-on, perform an eye open monitor (EOM) operation with respect to a signal received from the host device to generate an EOM result value, configured to store the EOM result value in a buffer memory, and configured to output the EOM result value within the buffer memory to the host device in response to receiving an asynchronous event request (AER) command from the host device.

According to an aspect of an example embodiment, a method of operating a storage system may include performing, by a storage device based on being powered-on, an eye open monitor (EOM) operation with respect to a received signal, to generate an EOM result value; receiving an asynchronous event request (AER) command from a host device; and transmitting the EOM result value to the host device.

According to an aspect of an example embodiment, a storage device may include an equalizer configured to adjust a gain of a received signal to generate equalized serial bits, an eye open monitor (EOM) unit configured to: input the equalized serial bits into a main path, to obtain a first output based on a reference condition, the reference condition including a reference clock and a reference voltage; input the equalized serial bits into an EOM path while changing an offset clock and an offset voltage, to obtain a second output; and generate an error count signal based on a count of an error between the first output and the second output, and generate a sampling count signal based on a count of a comparison between the first output and the second output; an eye diagram generation (EGU) unit configured to generate, based on the error count signal and the sampling count signal, an eye diagram in which the received signal is divided into unit intervals and values of divided segments are superimposed with each other, and configured to generate an EOM result value including at least one of the error count signal or the eye diagram; and an analog front end (AFE) controller configured to control the equalizer based on the EOM result value.

### BRIEF DESCRIPTION OF THE DRAWINGS

Example embodiments will be more clearly understood from the following detailed description taken in conjunction with the accompanying drawings.
FIG. 1 is a drawing showing a storage system according to an example embodiment.
FIG. 2 is a drawing showing a host interface according to an example embodiment.
FIG. 3 is a drawing for explaining an operation of a clock data recovery (CDR) block according to an example embodiment.
FIG. 4 is a drawing for explaining an eye open monitor (EOM) operation.
FIG. 5 is a drawing showing a storage controller and a memory device according to an example embodiment.
FIG. 6 is a block diagram showing the memory device of FIG. 5.
FIG. 7 is a drawing showing a storage system according to an example embodiment.
FIG. 8 and FIG. 9 are flowcharts for explaining a process of performing an EOM operation of a storage device according to an example embodiment.
FIG. 10 is a drawing showing a storage system according to an example embodiment.
FIG. 11 is a drawing showing an example of a storage system according to FIG. 10.
FIG. 12 is a drawing showing an example of a storage system according to FIG. 10.
FIG. 13 is a drawing showing a data transmission and reception system according to an example embodiment.
FIG. 14 is a drawing showing a user system applied with a storage system according to an example embodiment.

### DETAILED DESCRIPTION

In the following detailed description, only certain example embodiments of the disclosure have been shown and described, simply by way of illustration. As those skilled in the art would realize, the described embodiments may be modified in various different ways, all without departing from the scope of the invention which is defined in the claims.

Accordingly, the drawings and description are to be regarded as illustrative in nature and not restrictive. Like reference numerals designate like elements throughout the specification. In the flowchart described with reference to the drawings, the operation order may be changed, several operations may be merged, certain operations may be divided, and particular operations may not be performed.

In addition, expressions written in the singular may be construed in the singular or plural unless an explicit expression such as "one" or "single" is used. Terms including ordinal numbers such as first, second, and the like will be used only to describe various components, and are not to be interpreted as limiting these components. These terms may be used for the purpose of distinguishing one component from other components.

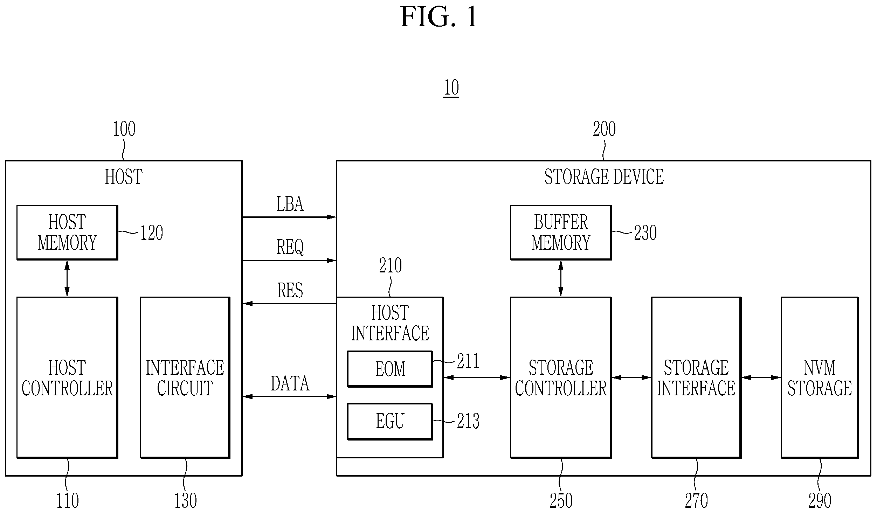

FIG. 1 is a drawing showing a storage system according to an example embodiment.

In an embodiment, a storage system 10 may be included in user devices such as a personal computer, a laptop computer, a server, a media player, a digital camera, and/or the like, or an automotive device such as a navigation, a black box, an automotive electronic device, and/or the like. Alternatively, the storage system 10 may be included in a mobile system such as a portable communication terminal (e.g., mobile phone), a smart phone, a tablet personal computer (tablet PC), a wearable device, a healthcare device, or an internet of things (IOT) device.

As shown in FIG. 1, the storage system 10 includes a host device 100 and a storage device 200.

The host device 100 may control an overall operation of the storage system 10.

The host device 100 may communicate with the storage device 200 through various interfaces. For example, the host device 100 may communicate with the storage device 200 through various interfaces such as universal serial bus (USB), MultiMediaCard (MMC), PCI Express (PCI-E), AT Attachment (ATA), serial AT Attachment (SATA), parallel AT Attachment (PATA), Small Computer System Interface (SCSI), Serial Attached SCSI (SAS), Enhanced Small Disk Interface (ESDI), Integrated Drive Electronics (IDE), non-volatile memory express (NVMe), and/or the like. In an embodiment, when the host device 100 uses NVMe, the storage device 200 may use an asynchronous event request (AER) defined by NVMe specification. The storage device 200 may make a request to the host device 100 by using the asynchronous event request (AER). However, even when a predetermined interfacing method is not NVMe, the storage device 200 may make a request using a method corresponding to the asynchronous event request (AER). Hereinafter, as an example, it is assumed that the storage device 200 uses the asynchronous event request (AER) specified in the NVMe specifications.

The host device 100 may include a host controller 110, a host memory 120, and an interface circuit 130.

The host controller 110 may control operations (e.g., calculation, logic, control, input/output, and/or the like) of the host device 100. For example, the host controller 110 may include, for example, a central processing unit (CPU), a graphics processing unit (GPU), a microprocessor, or an application processor (AP).

In an embodiment, the host device 100 may provide a request signal REQ and a logical block address LBA to the storage device 200. For example, the request signal REQ may include an eye open monitor (EOM) acquisition signal for obtaining an EOM result value of the storage device 200, and/or a control signal for controlling the storage device 200 based on the EOM result value. In an embodiment, the EOM acquisition signal may be an asynchronous event reporting (AER) signal. In addition, the host device 100 may exchange data DATA with a plurality of storage devices 200.

The host memory 120 may store commands and data executed and processed by the host controller 110. For example, an operating system executed by the host controller 110 may include a file system for file management, and a device driver for controlling peripheral devices including the storage device 200 at an operating system level.

In an embodiment, the host controller 110 and the host memory 120 may be implemented as a separate semiconductor chip. In an embodiment, the host controller 110 and the host memory 120 may be integrated on the same semiconductor chip. For example, the host controller 110 may be one of a plurality of modules provided in an application processor, and the application processor may be implemented as a system-on-chip (SoC). In addition, the host memory 120 may be an embedded memory provided within an application processor, or may be a non-volatile memory or memory module disposed outside an application processor.

The host device 100 may communicate with the storage device 200 through the interface circuit 130. Specifically, the interface circuit 130 may receive, from the storage device 200, the EOM result value of the storage device 200 eg as a response RES to the request signal REQ (or the EOM acquisition signal included in the request signal REQ). In addition, the interface circuit 130 may receive a control signal generated by the host controller 110 and may transmit the control signal to the storage device 200.

The storage device 200 may be accessed by the host device 100. The storage device 200 may store the data DATA, received from the host device 100, or process the data DATA in response to the request signal REQ from the host device 100. For example, the storage device 200 may be implemented as a solid-state drive (SSD), a smart SSD, an embedded multi-media card (eMMC), an embedded universal flash storage (UFS) memory device, a UFS memory card, a Compact Flash (CF), a Secure Digital (SD), a micro Secure Digital (Micro-SD), a mini Secure Digital (Mini-SD), an extreme digital (xD), a memory stick, or a similar form.

The storage device 200 may include a host interface 210, a storage controller 250, a buffer memory 230, a storage interface 270, and a non-volatile storage 290.

The host interface 210 may transmit and receive packets with the host device 100. The packet transmitted from the host device 100 to the host interface 210 may include a command, data to be written in the non-volatile storage 290, and/or the like. A packet transmitted from the host interface 210 to the host device 100 may include the response RES with respect to the command, and/or the data DATA read from the non-volatile storage 290. The host interface 210 may transmit an EOM result and/or (or comprising) an eye diagram as the response RES to the host device 100, in response to the EOM acquisition signal received from the host device 100. The eye diagram may be a diagram in which an input signal is divided into unit intervals and divided segments are superimposed with each other and displayed. For example, the eye diagram may be a graph of a signal with time on the x-axis and measurement voltage on the y-axis. In an embodiment, the host interface 210 may transmit the EOM result and/or (or comprising) the eye diagram to the host device 100 in an AER method.

In an embodiment, the interface circuit 130 and the host interface 210 may support multiple lanes, and each lane may be implemented as a differential pair. For example, the interface circuit 130 and the host interface 210 may include at least one reception lane and at least one transmission lane. The number of transmission lanes and reception lanes included in the interface circuit 130 and the host interface 210 may be predetermined. For example, the storage device 200 may transmit data to the host device 100 through the transmission lane, while receiving data from the host device 100 through the reception lane. In addition, control data, such as commands from the host device 100 to the storage device 200, and user data to be stored in the non-volatile storage 290 of the storage device 200 or to be read from the non-volatile storage 290 by the host device 100 may be transmitted through the same lane(s).

In an embodiment, the host interface 210 may include an EOM unit 211 and an eye diagram generation (EGU) unit 213.

The EOM unit 211 may measure signal distortion due to channel through which the data DATA is transmitted.

In more detail, the EOM unit 211 may perform the EOM operation on a signal provided from the host device 100. The EOM operation may be an operation that measures a quality of the signal received from the host device 100 under a particular offset condition. For example, signal transmitted from the host device 100 may be attenuated under an influence of a channel, and the host interface 210 may receive the attenuated signal. For example, in the signal transmitted from the host device 100, a high-frequency component may have a larger degree of attenuation than a low-frequency component due to the influence of the channel. The EOM unit 211 may generate an EOM result value indicating an attenuated level of the signal.

In an embodiment, the EOM unit 211 may perform the EOM operation when the storage device 200 is powered up. That is, the EOM unit 211 may perform the EOM operation without receiving a separate command to perform the EOM operation.

In an embodiment, the EOM unit 211 may transmit the EOM result value to the host device 100 when the attenuated level of the signal is a predetermined threshold value or more based on the EOM result value.

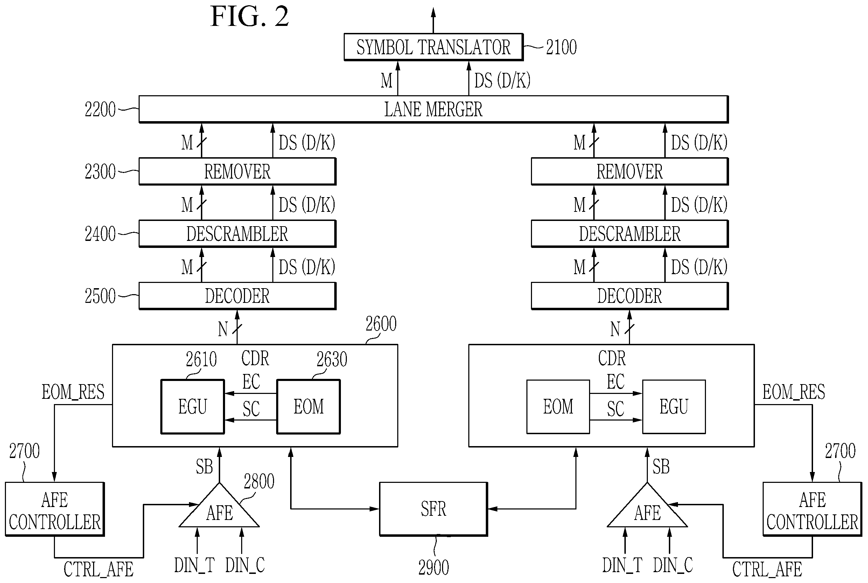

The EGU unit 213 may generate the eye diagram based on the EOM result value measured and/or generated by the EOM unit 211. An example structure of the host interface 210 will be later described with reference to FIG. 2.

The storage controller 250 may control an overall operation of the storage device 200. In an embodiment, the storage controller 250 may include a central processing unit (CPU), a controller, an application-specific integrated circuit (ASIC), and/or the like.

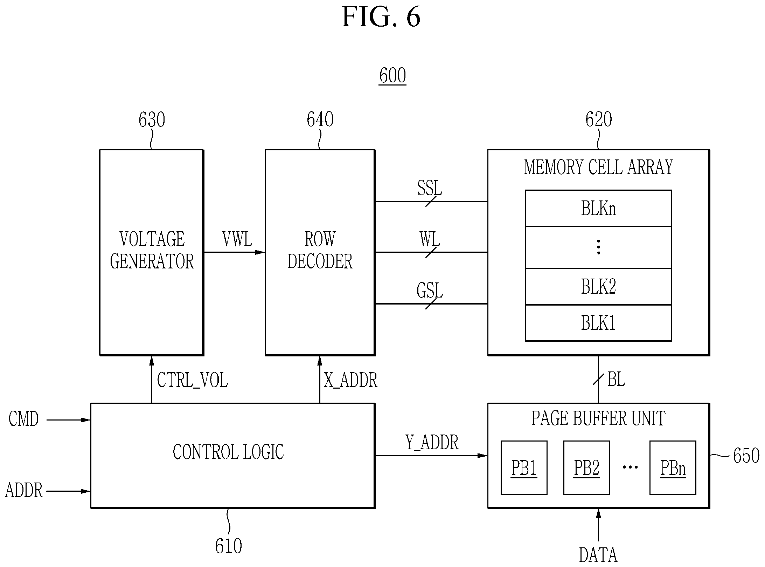

For example, the storage controller 250 may provide a signal (e.g., an address ADDR, a command CMD, a control signal CTRL of FIG. 6) for controlling the non-volatile storage 290 in response to the request signal REQ received from the host device 100 and/or the like. For example, the storage controller 250 may provide signals to the non-volatile storage 290, so as to write data in the non-volatile storage 290, or to read data from the non-volatile storage 290. In addition, the storage controller 250 and the non-volatile storage 290 may exchange the data DATA.

In an embodiment, the storage controller 250 may use the buffer memory 230 and/or the non-volatile storage 290 as an operating memory of the storage controller 250.

The buffer memory 230 may store commands and data executed and processed by the storage controller 250. The buffer memory 230 may temporarily store data stored or to-be-stored in the non-volatile storage 290. In an embodiment, the buffer memory 230 may temporarily store the EOM result value measured by the host interface 210.

The buffer memory 230 may be implemented as a volatile memory such as a dynamic random-access memory (DRAM), a static RAM (SRAM), and/or the like. However, it is not limited thereto, and the buffer memory 230 may be implemented as a resistive non-volatile memory such as a magnetic RAM (MRAM), a phase change RAM (PRAM), a resistive RAM (ReRAM), and/or the like, and various types of non-volatile memories such as a flash memory, a nano-floating gate memory (NFGM), a polymer random-access memory (PoRAM), a ferroelectric random-access memory (FRAM), and/or the like.

In an embodiment, the buffer memory 230 may store code data required for initial booting of the storage device 200. The buffer memory 230 may buffer the request signal REQ, the data DATA, commands, etc. received from the host device 100. Signals buffered in the buffer memory 230 may be transferred to the non-volatile storage 290 through the storage interface 270 and used therein. For example, the data DATA buffered in the buffer memory 230 may be programmed in the non-volatile storage 290.

The storage controller 250 and the non-volatile storage 290 may be connected to each other through the storage interface 270. The storage interface 270 may be implemented to comply with standard protocols such as Toggle or open NAND flash interface (ONFI). In an embodiment, the storage interface 270 may be used to transmit a command and a control signal together with data to be written in the non-volatile storage 290, to the non-volatile storage 290, or may be used to receive data read from the non-volatile storage 290. The storage interface 270 may be implemented to comply with standard protocols such as Toggle or ONFI.

The non-volatile storage 290 may include a plurality of storage units. Each of the plurality of storage units may include a V-NAND flash memory in a 2D structure or 3D structure, but may include another type of non-volatile memory such as a PRAM and/or an RRAM. A magnetic RAM (MRAM), a spin-transfer torque MRAM, a conductive bridging RAM (CBRAM), a ferroelectric RAM (FeRAM), a phase RAM (PRAM), a resistive memory (e.g., resistive RAM), and various other types of a memory may be applied in embodiments as a storage unit included in the non-volatile storage 290.

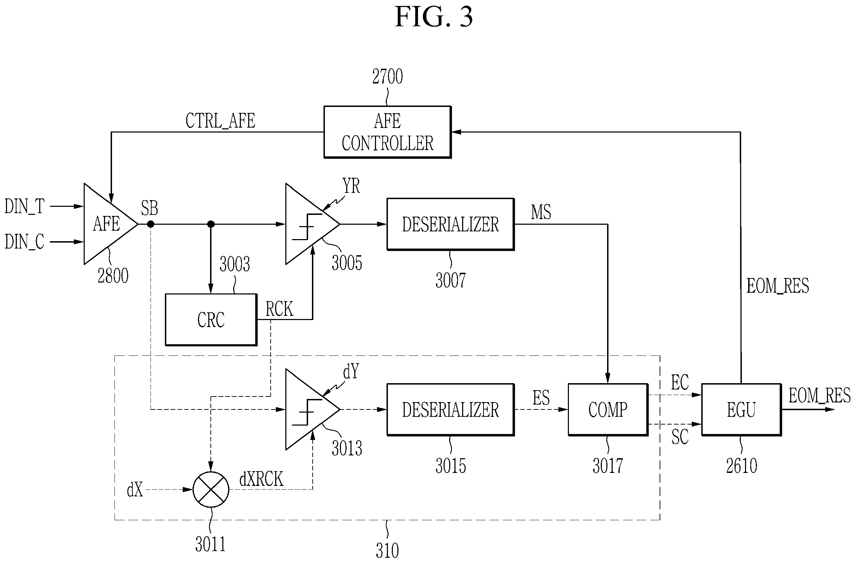

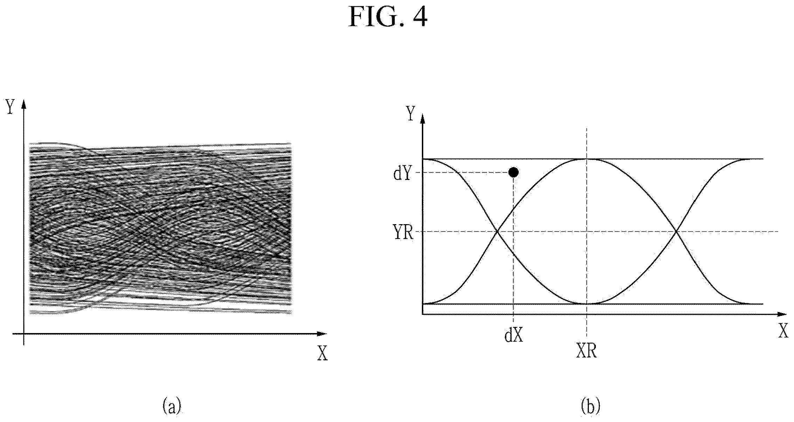

FIG. 2 is a drawing showing a host interface according to an example embodiment. FIG. 3 is a drawing for explaining an operation of a clock data recovery (CDR) block according to an example embodiment. FIG. 4 is a drawing for explaining an EOM operation.

As shown in FIG. 2, the host interface 210 may include an equalizer 2800 including an analog front end (AFE), a CDR block 2600, a decoder 2500, a descrambler 2400, a symbol remover 2300, a lane merger 2200, a symbol translator 2100, an AFE controller 2700, and a special function register (SFR) 2900.

The equalizer 2800 may receive a differential input signal pair DIN_T and DIN_C as the data DATA from the host device 100, and may perform equalizing to output serial bits SB. The equalizer 2800 may adjust a gain of the input signal and output the serial bits SB that equalize the input signal. The equalizer 2800 may compensate for signal distortion by considering characteristics of a transmission channel, and may determine the compensation level of the signal distortion according to the equalization coefficient.

In an embodiment, the equalizer 2800 may include a continuous time linear equalizer (CTLE) and a decision feedback equalizer (DFE). The CTLE may uniformly equalize all frequency components of data signals by amplifying a magnitude of high-frequency components of the data signals by considering the influence of the channel. For example, the CTLE may include a sample and hold circuit, sample data signals by using the sample and hold circuit, and perform the equalization operation by using the sample result. The DFE may perform decision feedback-based equalization operation on the sample data.

The CDR block 2600 may receive the serial bits SB equalized by the equalizer 2800, and may use the serial bits SB to recover data. Specifically, the CDR block 2600 may perform clock data recovery (CDR) and data deserialization, to output a signal of N bit (N is a natural number).

In an embodiment, the CDR block 2600 may include an EOM unit 2630 configured to perform the EOM operation in order to measure the signal quality of a communication channel with respect to the host device 100, and an EGU unit 2610 configured to generate an eye diagram. The CDR block 2600 may generate an EOM result value EOM_RES. The EOM result value EOM_RES may include at least one of an error count signal EC and the eye diagram. In an embodiment, the EOM result value EOM_RES may further include a sampling count signal SC.

The EOM unit 2630 may perform the EOM operation on the serial bits SB received from the equalizer 2800.

In an embodiment, the EOM operation of the EOM unit 2630 may be performed by using the SFR 2900, but the disclosure is not limited thereto, and the EOM operation may be performed based on data stored in the buffer memory 230.

The SFR 2900 may store data to be used in the EOM operation of the EOM unit 2630. For example, the SFR 2900 may store a value related to an offset that is set during the EOM operation.

Referring to FIG. 3 together, the EOM unit 2630 may perform the EOM operation by comparing a main path signal MS generated based on and/or passing through a main path indicated by a solid line in FIG. 3 and an EOM path signal ES generated based on and/or passing through an EOM path 310 indicated by a dotted line in FIG. 3.

A clock recovery circuit (CRC) 3003, a slicer 3005, and a deserializer 3007 may be positioned on a main path.

The clock recovery circuit 3003 may recover the clock based on the serial bits SB and generate a recovered clock RCK.

The slicer 3005 may extract data of the serial bits SB based on the recovered clock RCK and a reference voltage YR. That is, the slicer 3005 may use the recovered clock RCK as a reference clock. The slicer 3005 may transfer the extracted data to the deserializer 3007. The reference voltage YR will be later described with reference to FIG. 4.

The deserializer 3007 may generate the main path signal MS by deserializing data received from the slicer 3005. The deserializer 3007 may transfer the main path signal MS to a comparator 3017.

A multiplier 3011, a slicer 3013, a deserializer 3015, and the comparator 3017 may be position on the EOM path 310.

The multiplier 3011 may receive the recovered clock RCK from the clock recovery circuit 3003, and generate an EOM clock dXRCK reflecting a particular offset clock value dX in the recovered clock RCK. In an embodiment, the multiplier 3011 may receive the particular offset clock value dX from the SFR 2900 such as that in FIG. 2.

The slicer 3013 may receive the EOM clock dXRCK from the multiplier 3011, and may extract data of the serial bits SB based on the received EOM clock dXRCK and a particular offset value dY. The slicer 3013 may transfer the extracted data to the deserializer 3015. In an embodiment, the slicer 3013 may receive the particular offset value dY from the SFR 2900.

The deserializer 3015 may generate the EOM path signal ES by deserializing data received from the slicer 3013. The deserializer 3015 may transfer the EOM path signal ES to the comparator 3017.

Referring to FIG. 4 together, the main path signal MS may comprise or correspond to data extracted based on reference conditions XR and YR of FIG. 4, and the EOM path signal ES may comprise or correspond to data extracted based on offset values dX and dY of FIG. 4.

As shown in FIG. 4, an eye diagram is used to represent a signal according to a time offset value on an X-axis and a voltage offset value on a Y-axis. Specifically, FIG. 4(a) shows an eye diagram of an input signal before equalization by the equalizer 2800, and FIG. 4(b) shows a diagram of an input signal after equalization by the equalizer 2800. As described above, the eye diagram refers to a diagram that is obtained by dividing an input signal into unit intervals, and superimposing voltage values of the divided segments.

In FIG. 4, it is illustrated that the offset value dX is the time offset value, and the offset value dY is the voltage offset value, but the disclosure is not limited thereto, and the offset clock value dX may be, for example, a phase offset value.

The time offset value, or the phase offset value, to be used in performing the EOM operation may be provided from the host device 100 to the storage device 200 through a timing offset field and a timing step field. How the input signal changes may be measured as the time offset value within a predetermined range and the voltage offset value within a predetermined range are changed and provided to the equalizer 2800. In embodiments, a change in the input signal may be measured when various time offset values within a predetermined range and various voltage offset values within a predetermined range are provided to the equalizer 2800.

In the case of a signal having the eye diagram shown in FIG. 4(a), it may be difficult to determine a baseline that serves as a standard for distinguishing between 0 and 1, and the size of the signal also varies. Therefore, it may be difficult to determine the value of the data received from the equalizer 2800. In this case, the equalizer 2800 may compensate for signal distortion caused by a transmission channel by performing an equalization operation on the input signal to facilitate determining the data value.

In the case of a signal having the eye diagram shown in FIG. 4(b), upper and lower divisions are clear based on the reference conditions XR and YR, and thus, it may be easy to distinguish data between 0 and 1. That is, the equalizer 2800 may sample the input signal and adjust the gain of the input signal such that the data value may be easily determined. At this time, the equalizer 2800 may control the gain applied to the input signal based on the control of the AFE controller 2700.

The input signal equalized by the equalizer 2800 may represent each of the offset value dX and the offset value dY, not in a single value as in the embodiment shown in FIG. 4, but in two fields, that is, a reference value (e.g., reference phase or reference voltage) and an offset value (e.g., offset phase value or offset voltage value) with respect to the reference value.

The comparator 3017 may compare the main path signal MS and the EOM path signal ES. In an embodiment, the offset value dX input to the multiplier 3011 on the EOM path 310 and the offset value dY input to the slicer 3013 may be changed within a predetermined range. The comparator 3017 may compare each of the EOM path signals ES, changed as the offset values dX and dY changes, with the main path signal MS.

When a difference exists between the main path signal MS and the EOM path signal ES (in embodiments, when the main path signal MS does not match with the EOM path signal ES), the comparator 3017 may determine that there exists an error, and determine an error count according to the offset values dX and dY. The comparator 3017 may generate the error count signal EC based on the error count, that is determined according to the offset values dX and dY.

In addition, the comparator 3017 may output the sampling count signal SC whenever sampling (e.g., comparison of the EOM path signal ES and the main path signal MS) is performed.

The comparator 3017 may transfer the generated error count signal EC and the sampling count signal SC to the EGU unit 2610.

The EGU unit 2610 may generate the eye diagram based on the error count signal EC and the sampling count signal SC. For example, an eye diagram of which an X-axis represents the offset value X and a Y-axis represents the voltage value Y. The EGU unit 2610 may generate the EOM result value EOM_RES based on the error count signal EC and the sampling count signal SC received from the comparator 3017. The EOM result value EOM_RES may include the error count signal EC, the sampling count signal SC, and the eye diagram.

In an embodiment, the offset value dX, the offset value dY, the error count value according to the error count signal EC, and the sampling count information according to the sampling count signal SC, and the like may be stored in a SFR eg 2900, but the disclosure is not limited thereto, and such information may be stored in the buffer memory (e.g., 230 of FIG. 1).

The AFE controller 2700 may receive the EOM result value EOM_RES from the EGU unit 2610. The EOM result value EOM_RES may include the error count signal EC, the sampling count signal SC, and the eye diagram.

The AFE controller 2700 may generate an AFE control signal CTRL_AFE based on the received EOM result value EOM_RES. The AFE control signal CTRL_AFE may be a signal for changing a physical (PHY) setting(s) of / within the equalizer 2800. For example, the PHY setting may include a gain of at least one of the CTLE and the DFE. When the CTLE and the DFE increase the magnitude of the input voltage required for the input signal, the error may decrease and the error count in the error count signal EC may decrease.

However, the disclosure is not limited thereto, and the AFE controller 2700 may generate the AFE control signal CTRL_AFE for controlling various elements, eg of the host interface 210, such that the error count in the error count signal EC may be a predetermined threshold value or less.

Referring back to FIG. 2, the decoder 2500 may decode an N-bit signal from the CDR block 2600 into an M-bit signal (M is a natural number smaller than N) and a distinction signal DS. The decoder 2500 may output the M-bit signal and/or the distinction signal DS to the descrambler 2400. In an embodiment, the N-bit signal may be a 1 0-bit signal and the M-bit signal may be an 8-bit signal, but the disclosure is not limited thereto.

The N-bit signal received from the CDR block 2600 may be a data signal D or a control signal K. The decoder 2500 may, when the N-bit signal is a data symbol, output the data signal D as the distinction signal DS. The decoder 2500 may, when the N-bit signal is a control symbol, output the control signal K as the distinction signal DS.

The descrambler 2400 may perform descrambling on the input M-bit signal. The descrambler 2400 may output the descrambled signal to the symbol remover 2300.

The symbol remover 2300 may remove a skip symbol such as a marker from the input M-bit signal.

The lane merger 2200 may merge signals input to each lane. The lane merger 2200 may provide the merged signal to the symbol translator 2100.

The symbol translator 2100 may translate symbols. The symbol translator 2100 may output translated symbol to the storage controller 250.

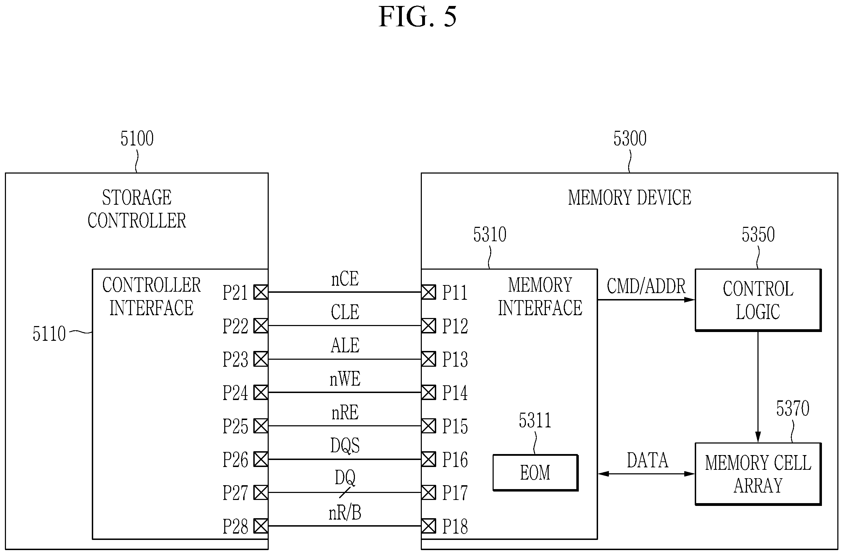

FIG. 5 is a drawing showing a storage controller and a memory device according to an example embodiment.

A memory device 5300 may include first to eighth pins P11 to P18, a memory interface circuit 5310, a control logic 5350, and a memory cell array 5370.

The memory interface circuit 5310 may receive a chip enable signal nCE from a storage controller 5100 through the first pin P11. The memory interface circuit 5310 may transmit and receive signals with the storage controller 5100 through the second to eighth pins P12 to P18 according to the chip enable signal nCE.

The memory interface circuit 5310 may receive a command latch enable signal CLE, an address latch enable signal ALE, and a write enable signal nWE from the storage controller 5100 through the second to fourth pins P12 to P14. The memory interface circuit 5310 may receive the data signal DQ from the storage controller 5100 through the seventh pin P17, or may transmit the data signal DQ to the storage controller 5100. The command CMD, the address ADDR, and the data DATA may be transferred through the data signal DQ. For example, the data signal DQ may be transferred through a plurality of data signal lines. In this case, the seventh pin P17 may include a plurality of pins corresponding to a plurality of data signals.

The memory interface circuit 5310 may obtain the command CMD from the data signal DQ received in an enable period (e.g., high level state) of the command latch enable signal CLE based on toggle timing of the write enable signal nWE. The memory interface circuit 5310 may obtain the address ADDR from the data signal DQ received in an enable period (e.g., high level state) of the address latch enable signal ALE based on the toggle timings of the write enable signal nWE.

The memory interface circuit 5310 may receive a read enable signal nRE from the storage controller 5100 through the fifth pin P15. The memory interface circuit 5310 may receive a data strobe signal DQS from the storage controller 5100 through the sixth pin P16, or may transmit the data strobe signal DQS to the storage controller 5100 eg through the sixth pin P16.

In an operation of the memory device 5300 of outputting the data DATA, the memory interface circuit 5310 may receive the read enable signal nRE that toggles through the fifth pin P15 before outputting the data DATA. The memory interface circuit 5310 may generate the data strobe signal DQS that toggles based on toggling of the read enable signal nRE. The memory interface circuit 5310 may transmit the data signal DQ that include the data DATAs based on toggle timing of the data strobe signal DQS. Accordingly, the data DATA may be transmitted to the storage controller 5100 by being aligned with the toggle timing of the data strobe signal DQS.

In an operation of the memory device 5300 of inputting the data DATA, when the data signal DQ including the data DATA is received from the storage controller 5100, the memory interface circuit 5310 may receive the data strobe signal DQS that toggles together with the data DATA from the storage controller 5100. The memory interface circuit 5310 may obtain the data DATA from the data signal DQ based on toggle timing of the data strobe signal DQS.

The memory interface circuit 5310 may transmit a ready/busy output signal nR/B to the storage controller 5100 through the eighth pin P18. The memory interface circuit 5310 may transmit state information of the memory device 5300 to the storage controller 5100 through the ready/busy output signal nR/B. When the memory device 5300 is in a busy state (e.g., when internal operations of the memory device 5300 is being performed), the memory interface circuit 5310 may transmit the ready/busy output signal nR/B indicating the busy state to the storage controller 5100. When the memory device 5300 is in a ready state (e.g., internal operations of the memory device 5300 are not performed or completed), the memory interface circuit 5310 may transmit the ready/busy output signal nR/B indicating the ready state to the storage controller 5100.

The memory interface circuit 5310 may include an EOM unit 5311. The EOM unit 5311 may perform the EOM operation on the data DATA received from the storage controller 5100 through the seventh pin P17. The EOM operation may be an operation that measures a quality of a signal received from the storage controller 5100 under a particular offset condition.

In an embodiment, the EOM unit 5311 may perform the EOM operation when the memory device 5300 is powered up. In addition, the EOM unit 5311 may transmit the EOM result value to the storage controller 5100 in the AER method when the error count included in the EOM result value obtained by the EOM operation is a predetermined threshold value or more. In an embodiment, the memory interface circuit 5310 may change the PHY setting based on the EOM result value.

The control logic 5350 may generally control various operations of the memory device 5300. The control logic 5350 may receive a command/address CMD/ADDR obtained from the memory interface circuit 5310. The control logic 5350 may generate control signals for controlling other components of the memory device 5300 according to the received command/address CMD/ADDR. For example, the control logic 5350 may generate various control signals for programming the data DATA in the memory cell array 5370, or reading the data DATA from the memory cell array 5370.

The memory cell array 5370 may store the data DATA obtained from the memory interface circuit 5310 under the control of the control logic 5350. The memory cell array 5370 may output the stored data DATA to the memory interface circuit 5310 under the control of the control logic 5350.

The memory cell array 5370 may include a plurality of memory cells. For example, the plurality of memory cells may be flash memory cells. Hereinafter, the description is made assuming that the memory cells are NAND flash memory cells, but the disclosure is not limited thereto, and the memory cells may be any other types of memory cells such as, for example but not limited to, resistive random-access memory (RRAM) cells, ferroelectric random-access memory (FRAM) cells, phase-change random access memory (PRAM) cells, thyristor random-access memory (TRAM) cells, and magnetic random-access memory (MRAM) cells.

The storage controller 5100 may include first to eighth pins P21 to P28, and a controller interface circuit 5110. The first to eighth pins P21 to P28 may correspond to the first to eighth pins P11 to P18 of the memory device 5300. The storage controller 5100 and the memory device 5300 may transmit and receive the command CMD, the address ADDR, and the data DATA through the controller interface circuit 5110 and the memory interface 5310.

The controller interface circuit 5110 may transmit the chip enable signal nCE to the memory device 5300 through the first pin P21. The controller interface circuit 5110 may transmit and receive signals to and from the memory device 5300, selected through the chip enable signal nCE, through the second to eighth pins P22 to P28.

The controller interface circuit 5110 may transmit the command latch enable signal CLE, the address latch enable signal ALE, and the write enable signal nWE to the memory device 5300 through the second to fourth pins P22 to P24. The controller interface circuit 5110 may transmit the data signal DQ to the memory device 5300 through the seventh pin P27, or may receive the data signal DQ from the memory device 5300.

The controller interface circuit 5110 may transmit the data signal DQ including the command CMD or the address ADDR together with the write enable signal nWE that toggles to the memory device 5300. In embodiments, the controller interface circuit 5110 may transmit the data signal DQ including the command CMD to the memory device 5300 based on the command latch enable signal CLE having the enable state being transmitted, and may transmit the data signal DQ including the address ADDR to the memory device 5300 based on the address latch enable signal ALE having the enable state being transmitted. Similarly, in embodiments, the controller interface circuit 5110 may transmit DQ including CMD to the memory device 5300 as the command latch enable signal CLE having the enable state is transmitted, and may transmit DQ including ADDR to the memory device 5300 as the address latch enable signal ALE having the enable state is transmitted. The controller interface circuit 5110 may transmit the read enable signal nRE to the memory device 5300 through the fifth pin P25. The controller interface circuit 5110 may receive the data strobe signal DQS from the memory device 5300 through the sixth pin P26, or may transmit the data strobe signal DQS to the memory device 5300.

In an operation of the memory device 5300 of outputting the data DATA, the controller interface circuit 5110 may generate the read enable signal nRE that toggles, and may transmit the read enable signal nRE to the memory device 5300. For example, the controller interface circuit 5110 may generate the read enable signal nRE that is changed from a fixed state (e.g., high level or low level) to a toggle state before the data DATA is output. Accordingly, the data strobe signal DQS that toggles based on the read enable signal nRE may be generated in the memory device 5300. The controller interface circuit 5110 may receive the data signal DQ including the data DATA together with the data strobe signal DQS that toggles from the memory device 5300. The controller interface circuit 5110 may obtain the data DATA from the data signal DQ based on toggle timing of the data strobe signal DQS.

In an operation of the memory device 5300 of inputting the data DATA, the controller interface circuit 5110 may generate the data strobe signal DQS that toggles. For example, the controller interface circuit 5110 may generate the data strobe signal DQS that is changed from a fixed state (e.g., high level or low level) to a toggle state before transmitting the data DATA. The controller interface circuit 5110 may transmit the data signal DQ including the data DATA to the memory device 5300 based on toggle timings of the data strobe signal DQS.

The controller interface circuit 5110 may receive the ready/busy output signal nR/B from the memory device 5300 through the eighth pin P28. The controller interface circuit 5110 may determine the state information of the memory device 5300 based on the ready/busy output signal nR/B.

FIG. 6 is a block diagram showing the memory device of FIG. 5.

Referring to FIG. 6, a memory device 600 may include a control logic 610, a memory cell array 620, a page buffer unit 650, a voltage generator 630, and a row decoder 2500. The memory device 600 may correspond to the memory device 5300 of FIG. 5.

The control logic 610 may generally control various operations of eg within the memory device 600. The control logic 610 may output various control signals in response to the command CMD and/or the address ADDR from the memory interface circuit 5310. For example, the control logic 610 may output a voltage control signal CTRL_vol, a row address X-ADDR, and a column address Y-ADDR.

The memory cell array 620 may include a plurality of memory blocks BLK1 to BLKn (n is a positive integer), and each of the plurality of memory blocks BLK1 to BLKn may include a plurality of memory cells. The memory cell array 620 may be connected to the page buffer unit 650 through a plurality of bit lines BL, and may be connected to the row decoder 2500 through wordlines WL, string selection lines SSL, and ground selection lines GSL.

In an embodiment, the memory cell array 620 may include a three-dimensional (3D) memory cell array, and the three-dimensional memory cell array may include a plurality of NAND strings. Each NAND string may include memory cells connected to wordlines vertically stacked on a substrate, respectively. In an embodiment, the memory cell array 620 may include a two-dimensional (2D) memory cell array, and the two-dimensional memory cell array may include a plurality of NAND strings disposed along row and column directions.

The page buffer unit 650 may include a plurality of page buffers PB1 to PBn (n is an integer of 3 or more), and the plurality of page buffers PB1 to PBn may be connected to the memory cells through the plurality of bit lines BL, respectively. The page buffer unit 650 may select at least one bit line of the plurality of bit lines BL in response to the column address Y-ADDR. The page buffer unit 650 may operate as a write driver or a sense amplifier depending on an operation mode. For example, during a program operation, the page buffer unit 650 may apply, to the selected bit line, a bit line voltage corresponding to data to be programmed. During a read operation, the page buffer unit 650 may detect data stored in a corresponding memory cell by detecting current or voltage of the selected bit line.

The voltage generator 630 may generate various types of voltages for performing the program, read, and erase operations based on the voltage control signal CTRL_vol. For example, the voltage generator 630 may generate a program voltage, a read voltage, a program verification voltage, an erase voltage, and/or the like a wordline voltage VWL.

The row decoder 2500 may select one of a plurality of wordlines WL in response to the row address X-ADDR, and select one of a plurality of string selection lines SSL. For example, during program operation, the row decoder 2500 may apply the program voltage and the program verification voltage to the selected wordline, and during a read operation, may apply the read voltage to the selected wordline.

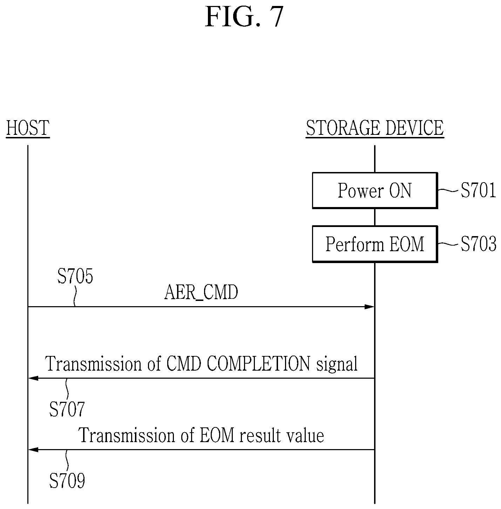

FIG. 7 is a drawing showing a storage system according to an example embodiment.

At step S701, the storage device 200 may be powered on.

For example, when the storage device 200 is connected to the host device 100, or the power supply voltage blocked from the host device 100 is provided to the storage device 200, the storage device 200 may be powered on.

At step S703, the storage device 200 may perform the EOM operation.

When the storage device 200 is powered on, the storage device 200 may perform the EOM operation on the signal received from the host device 100. The storage device 200 may temporarily store the EOM result value obtained by performing the EOM operation in the buffer memory 230. In an embodiment, the storage device 200 may store the EOM result value in the buffer memory 230 when the error count value in the EOM result value has a value of a predetermined threshold value or more.

At step S705, the host device 100 may transmit an asynchronous event request (AER) command AER_CMD to the storage device 200.

The asynchronous event request command AER_CMD may be a command for receiving an asynchronous event request (AER). In an embodiment, the asynchronous event request command AER_CMD may have a request for a device (or a device request). For example, the AER command may include a request for a device to perform the EOM operation.

In an embodiment, the host device 100 may issue the asynchronous event request command AER_CMD of a predetermined number for the storage device 200. The host device 100 may perform another operation in a state in which a response with respect to the asynchronous event request command AER_CMD has not been received.

At step S707, the storage device 200 may transmit a command completion signal to the host device 100.

In more detail, at step S705, the storage device 200 may receive the AER command. The storage device 200 may read a device request corresponding to the AER command, and generate a signal corresponding to the device request. In an embodiment, since the storage device 200 has obtained the EOM result value EOM_RES by performing the EOM operation at step S703, the storage device 200 may determine that the device request received from the host device 100 has been completed. Accordingly, the storage device 200 may generate the command completion signal that indicates that a command corresponding to the received device request has been completed. The storage device 200 may transmit the generated command completion signal to the host device 100.

Thereafter, at step S709, the storage device 200 may transmit the EOM result value EOM_RES to the host device 100.

In more detail, the storage device 200 may transmit, as the EOM result value EOM_RES, the asynchronous event request (AER) to the host device 100. The asynchronous event request (AER) may correspond one-to-one with a previously received asynchronous event request command AER_CMD. That is, the asynchronous event request (AER) of the storage device 200 may be a response corresponding to the asynchronous event request command AER_CMD.

In an embodiment, the storage device 200 may transmit the EOM result value EOM_RES to the host device 100 when the error count in the error count signal EC exceeds a predetermined threshold value.

Although not shown in FIG. 7, the storage device 200 may generate an AFE control signal based on the EOM result value EOM_RES. Accordingly, the storage device 200 may control the equalizer 2800 such that the error count has a value of a predetermined threshold value or less. The disclosure is not limited thereto, and various commands may be generated for controlling the host interface 210 in the storage device 200 based on the EOM result value EOM_RES received by the host device 100.

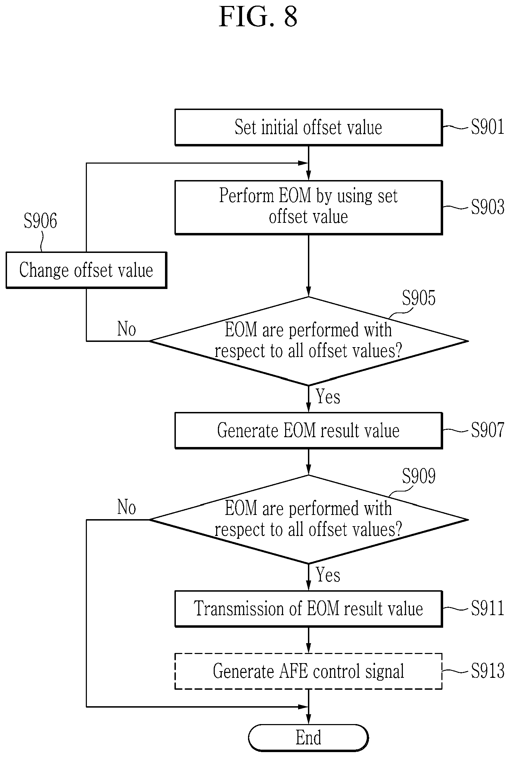

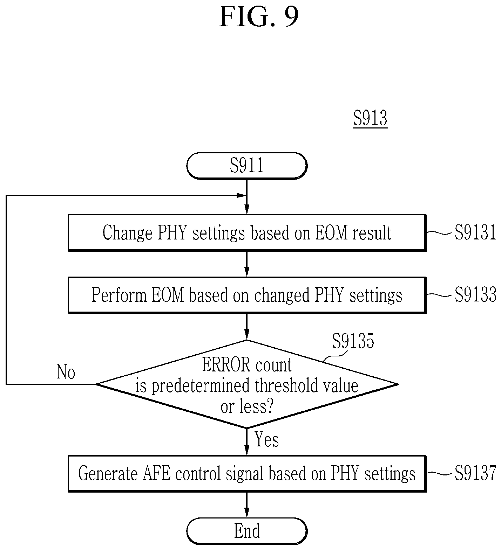

FIG. 8 and FIG. 9 are flowcharts for explaining a process of performing an EOM operation of a storage device according to an example embodiment. In particular, FIG. 8 and FIG. 9 are flowcharts for explaining step S703 of FIG. 7 for performing the EOM operation.

First, at step S901, the storage device 200 may set (or predetermine) an initial offset value.

In an embodiment, the initial offset value may be stored in the SFR 2900. The initial offset value may include the offset value dX (e.g., offset clock value or offset phase value) provided to the multiplier 3011, and the offset value dY (e.g., offset voltage value) provided to the slicer 3013.

At step S903, the storage device 200 may perform the EOM operation by using a predetermined offset value, which in embodiments changes within a predetermined range with respect to the set initial offset value.

The storage device 200 may generate the EOM path signal ES by using the predetermined offset value. Thereafter, the storage device 200 may compare the EOM path signal ES and the main path signal MS to generate the sampling count signal SC and the error count signal EC.

At step S905, the storage device 200 may determine whether the EOM operation is performed on all offset values, eg all the offset values in the predetermined range.

In more detail, the storage device 200 may determine whether the EOM operation is performed on all the offset values dX and dY within the predetermined range.

At step S906, when the EOM operation is not performed for all offset values, the storage device 200 may change the offset value preferably to another offset value within the predetermined range. Subsequently, the storage device 200 may proceed to step S903 to perform the EOM operation by using the changed offset value, and repeat step S905 to determine whether the EOM operation is performed on all offset values.

At step S907, when the EOM operation is performed for all offset values, the storage device 200 may generate the EOM result value EOM_RES.

In more detail, the EOM result value EOM_RES may include the error count signal EC, the sampling count signal SC, and the eye diagram. The eye diagram may be obtained by dividing an input signal into unit intervals and displaying the divided segments by superimposing values (e.g., voltage values) of the input signals. That is, the eye diagram may indicate a magnitude of the signal according to the offset value dX and the offset value dY.

At step S909, the storage device 200 may determine whether the error count of the error count signal EC is a predetermined threshold value or more.

At step S911, the storage device 200 may transmit the EOM result value when the error count of the error count signal EC is a predetermined threshold value or more.

In more detail, when an error count of an error count EC is a predetermined threshold value or more, the storage device 200 may transmit the EOM result value EOM_RES as the asynchronous event request (AER) to the host device 100. This may correspond to step S709 of FIG. 7 for transmitting the EOM result value EOM_RES.

Thereafter, at step S913, the storage device 200 may generate the AFE control signal CTRL_AFE.

In more detail, the storage device 200 may generate the AFE control signal CTRL_AFE based on the EOM result value EOM_RES. The AFE control signal CTRL_AFE may be a signal for changing the PHY setting of the equalizer 2800. In an embodiment, the PHY setting may include the gain of at least one of the CTLE and the DFE.

FIG. 9 describes in more detail step S913 of generating the AFE control signal CTRL_AFE.

First, at step S9131, the storage device 200 may change the PHY setting based on the EOM result.

In an embodiment, the PHY setting to be changed according to the EOM result may be predetermined. In an embodiment, the gain of the CTLE and/or the DFE may (in embodiments controlled to) increase, such that the error count may decrease.

At step S9133, the storage device 200 may perform the EOM operation based on a changed PHY setting.

In an embodiment, the storage device 200 may perform the EOM operation based on the increased gain of the CTLE and/or the DFE.

At step S9135, the storage device 200 may determine whether the error count is a predetermined threshold value or less.

In more detail, the storage device 200 may compare the main path signal MS and the EOM path signal ES performed based on the changed PHY setting, to generate the sampling count signal SC and the error count signal EC. The storage device 200 may determine whether the error count in the error count signal EC is smaller than or equal to the predetermined threshold value.

When the error count exceeds the predetermined threshold value, the storage device 200 may perform step S9131 and subsequent steps again.

At step S9137, when the error count is smaller than or equal to the predetermined threshold value, the storage device 200 may generate the AFE control signal CTRL_AFE based on the changed PHY setting.

In more detail, when the error count is the predetermined threshold value or less, the storage device 200 may generate the AFE control signal CTRL_AFE, to control the equalizer 2800 to have the PHY setting set at step S9131. While the above embodiment describes changing the PHY setting of the equalizer 2800, the disclosure is not limited thereto, and the storage device 200 may generate the AFE control signal CTRL_AFE to control various elements of the host interface 210 such that the error count in the error count signal EC may be the predetermined threshold value or less.

Meanwhile, in an embodiment, step S913 for the storage device 200 to generate the AFE control signal CTRL_AFE may be may be omitted. In this case, the storage device 200 may change the PHY setting of the storage device 200 based on the command for controlling the host interface 210 in the storage device 200 generated by the host device 100 in response to receiving the EOM result value EOM_RES by the host device 100.

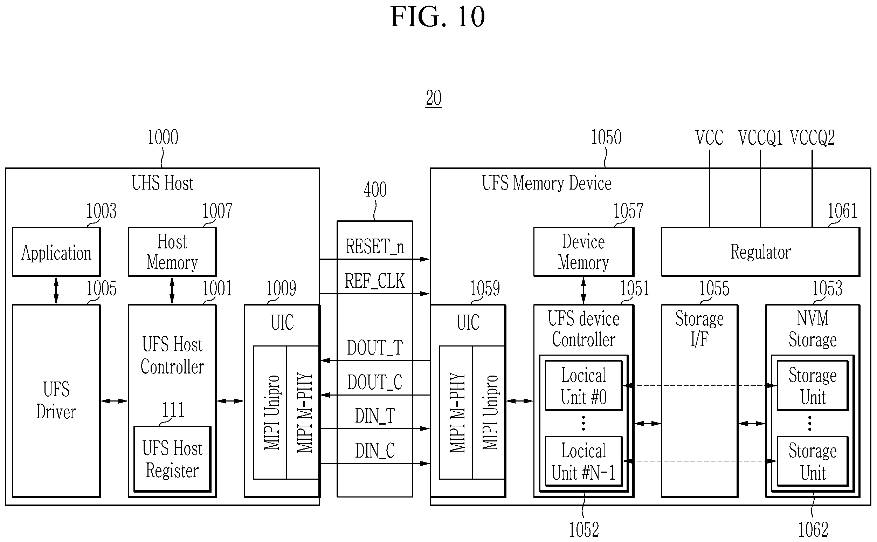

FIG. 10 is a drawing showing a storage system according to an example embodiment.

The storage system 10 described with reference to FIG. 1 to FIG. 9 may be a system complying the universal flash storage (UFS) standard published by the Joint Electron Device Engineering Council (JEDEC).

Referring to FIG. 10, a UFS system 20 may include a UFS host device 1000, a UFS memory device 1050 and a UFS interface 400.

The UFS host device 1000 and the UFS memory device 1050 may be interconnected through the UFS interface 400. In an embodiment, the UFS host device 1000 may be implemented as a part of an application processor.

The UFS host device 1000 may include a UFS host controller 1001, an application 1003, a UFS driver 1005, a host memory 1007, and a UIC (UFS interconnect) layer 1009.

The UFS memory device 1050 may include a UFS device controller 1051, a non-volatile storage 1053, a storage interface 1055, a device memory 1057, a UIC layer 1059, and a regulator 1061.

The non-volatile storage 1053 may be configured as a plurality of storage units 1062. The storage unit 1062 may include a V-NAND flash memory in a 2D structure or 3D structure, but the disclosure is not limited thereto, and the storage unit 1062 may include another type of non-volatile memory such as a PRAM and/or an RRAM.

The UFS device controller 1051 and the non-volatile storage 1053 may be connected to each other through the storage interface 1055. The storage interface 1055 may be implemented to comply with standard protocols such as Toggle or ONFI.

The application 1003 may be a program that communicates with the UFS memory device 1050 in order to use the function of the UFS memory device 1050. The application 1003 may transmit an input-output request (IOR) to the UFS driver 1005 for input/output with respect to the UFS memory device 1050. The input-output request (IOR) may include a read request, a write request, an erase request, and/or the like of data, but the disclosure is not limited thereto.

The UFS driver 1005 may manage the UFS host controller 1001 through UFS-host controller interface (HCl). The UFS driver 1005 may convert the input-output request generated by the application 1003 into an UFS command defined by the UFS standard, and may transfer the converted UFS command to the UFS host controller 1001. One input-output request may be converted into a plurality of UFS commands. The UFS command may be a command defined by the Small Computer System Interface (SCSI) standard, but may be a command exclusive to the UFS standard.

The UFS host controller 1001 may transmit the UFS command converted by the UFS driver 1005 to the UIC layer 1059 of the UFS memory device 1050 through a UIC layer 1009 and the UFS interface 400. In this case, a UFS host register 111 of the UFS host controller 1001 may function as a command queue (CQ).

The UIC layer 1009 of the UFS host device 1000 may include MIPI M-PHY and MIPI UniPro, and the UIC layer 1059 of the UFS memory device 1050 may also include MIPI M-PHY and MIPI UniPro.

The UFS interface 400 may include a line configured to transmit a reference clock REF_CLK, a line configured to transmit a hardware reset signal RESET_n with respect to the UFS memory device 1050, a pair of lines configured to transmit the differential input signal pair DIN_T and DIN_C, and a pair of lines configured to transmit a differential output signal pair DOUT_T and DOUT_C.

A frequency value of the reference clock REF_CLK provided from the UFS host device 1000 to the UFS memory device 1050 may be one of four values of 19.2MHz, 26MHz, 38.4MHz, and 52MHz, but is not necessarily limited thereto. The UFS host device 1000 may change the frequency value of the reference clock REF_CLK even during an operation, that is, even while data transmission and reception is being performed between the UFS host device 1000 and the UFS memory device 1050.

The UFS memory device 1050 may generate clocks of various frequencies from the reference clock REF_CLK provided from the UFS host device 1000, by using a phase-locked loop (PLL) and/or the like. In addition, the UFS host device 1000 may set a data rate value between the UFS host device 1000 and the UFS memory device 1050 through the frequency value of the reference clock REF_CLK. That is, the data rate value may be determined depending on the frequency value of the reference clock REF_CLK.

The UFS interface 400 may support multiple lanes, and each lane may be implemented as a differential pair. For example, the UFS interface 400 may include one or more reception lanes and one or more transmission lanes. In FIG. 1, a pair of lines configured to transmit the differential input signal pair DIN_T and DIN_C may constitute a reception lane, and a pair of lines configured to transmit the differential output signal pair DOUT_T and DOUT_C may constitute a transmission lane, respectively. Although FIG. 1 illustrates one transmission lane and one reception lane, the number of transmission lanes and reception lanes may be modified depending on embodiments.

The reception lane and the transmission lane may transmit data in the serial communication method, and by using a structure that separates the reception lane and the transmission lane, communication in a full-duplex method between the UFS host device 1000 and the UFS memory device 1050 is possible. That is, the UFS memory device 1050 may transmit data to the UFS host device 1000 through the transmission lane, while receiving data from the UFS host device 1000 through the reception lane. In addition, control data, such as commands from the UFS host device 1000 to the UFS memory device 1050, and user data to be stored in the non-volatile storage 1053 of the UFS memory device 1050 or to be read from the non-volatile storage 1053 by the UFS host device 1000 may be transmitted through the same lane. Accordingly, other than a pair(s) of reception lanes and a pair(s) of transmission lanes, a separate lane for data transmission may not be between the UFS host device 1000 and the UFS memory device 1050.

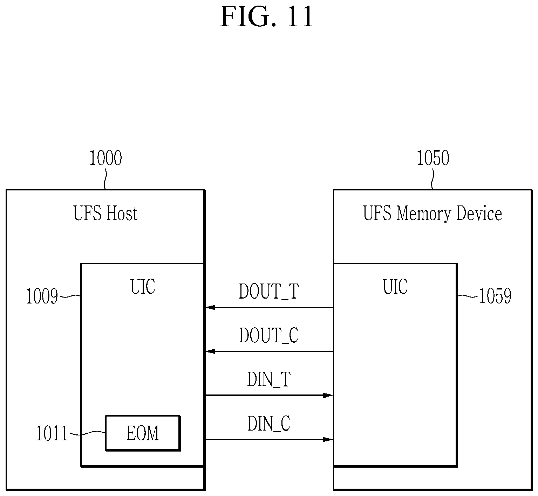

FIG. 11 is a drawing showing an example of a storage system according to FIG. 10.

In more detail, FIG. 11 is a drawing schematically illustrating an example of a storage system according to FIG. 10. Referring to FIG. 11, the storage system may include the UFS host device 1000 and the UFS memory device 1050. The UFS host device 1000 may include the UIC layer 1009, and the UIC layer 1009 may include an EOM unit 1011. The UFS memory device 1050 may include the UIC layer 1059.

The UIC layer 1009 of the UFS host device 1000 may perform the EOM operation. For example, the UIC layer 1009 of the UFS host device 1000 may perform the EOM operation on the differential output signal pair DOUT_T and DOUT_C received from the UFS memory device 1050. In an embodiment, the EOM unit 1011 in the UIC layer 1009 may perform the EOM operation, when the UFS host device 1000 is powered on. Thereafter, the UIC layer 1009 may store the EOM result value in a host memory (e.g., 107 in FIG. 10), when the error count in the error count signal EC is a predetermined threshold value or more. Thereafter, the UFS host device 1000 may transmit the EOM result value to the UFS memory device 1050. The UFS host device 1000 may change the PHY setting of the UFS host device 1000 based on the EOM result value.

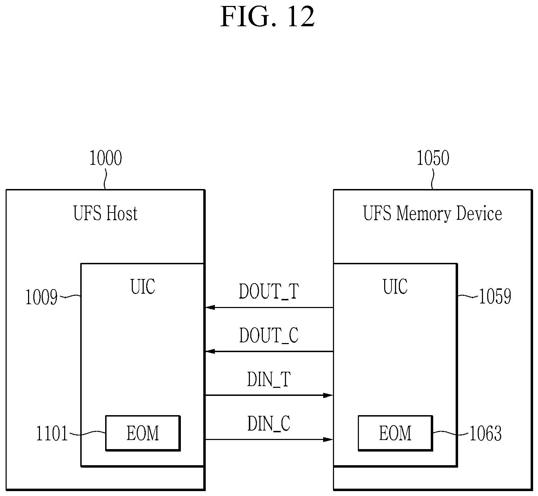

FIG. 12 is a drawing showing a storage system according to an example embodiment.

In more detail, FIG. 12 is a drawing schematically illustrating an example of a storage system according to FIG. 10. Referring to FIG. 12, storage system may include the UFS host device 1000 and the UFS memory device 1050. The UFS host device 1000 may include the UIC layer 1009, and the UIC layer 1009 may include the EOM unit 1011. The UFS memory device 1050 may include the UIC layer 1059, and the UIC layer 1059 may include an EOM unit 1063.

The UIC layer 1009 of the UFS host device 1000 may perform the EOM operation. For example, the UIC layer 1009 of the UFS host device 1000 may perform the EOM operation on the differential output signal pair DOUT_T and DOUT_C received from the UFS memory device 1050. In an embodiment, the EOM unit 1101 in the UIC layer 1009 may perform the EOM operation, when the UFS host device 1000 is powered on. Thereafter, the UIC layer 1009 may store the EOM result value in the host memory 1007 (refer to FIG. 10), when the error count in the error count signal EC is a predetermined threshold value or more. Thereafter, the UFS host device 1000 may transmit the EOM result value to the UFS memory device 1050. The UFS host device 1000 may change the PHY setting of the UFS host device 1000 based on the EOM result value.

Meanwhile, the UIC layer 1059 of the UFS memory device 1050 may also perform the EOM operation. For example, the UIC layer 1059 of the UFS memory device 1050 may perform the EOM operation on the differential input signal pair DIN_T and DIN_C received from the UFS host device 1000. In an embodiment, the EOM unit 1063 in the UIC layer 1059 may perform the EOM operation, when the UFS memory device 1050 is powered on. Thereafter, the UIC layer 1059 may store the EOM result value in the device memory 1057 (refer to FIG. 10), when the error count in the error count signal EC is a predetermined threshold value or more. Thereafter, the UFS memory device 1050 may transmit the EOM result value to the UFS host device 1000. The UFS host device 1000 may change the PHY setting of the UFS host device 1000 based on the EOM result value.

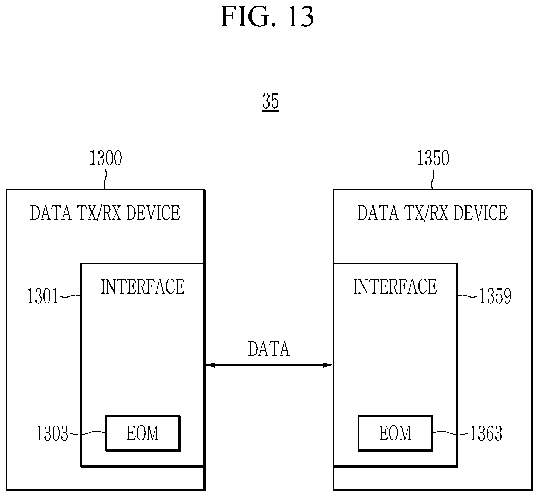

FIG. 13 is a drawing showing a data transmission and reception system according to an example embodiment.

Referring to FIG. 13, a data transmission and reception system 35 may include a first data transmission and reception device 1300 and a second data transmission and reception device 1350. The first data transmission and reception device 1300 may include a first interface 1301. The first interface 1301 may include an EOM unit 1303. The second data transmission and reception device 1350 may include a second interface 1359. The second interface 1359 may include an EOM unit 1363.

In an embodiment, the EOM unit 1303 may perform the EOM operation, when the first data transmission and reception device 1300 is powered on. In addition, the EOM unit 1363 may perform the EOM operation, when the second data transmission and reception device 1350 is powered on. That is, the EOM operation may be performed on data symbols transferred between the first data transmission and reception device 1300 and the second data transmission and reception device 1350.

The EOM unit 1303 may temporarily store the EOM result value in a memory in the first data transmission and reception device 1300, when the error count in the error count signal EC is a predetermined threshold value or more. Thereafter, the first data transmission and reception device 1300 may transmit the EOM result value to the second data transmission and reception device 1350.

The EOM unit 1363 may temporarily store the EOM result value in a memory in the second data transmission and reception device 1350, when the error count in the error count signal EC is a predetermined threshold value or more. Thereafter, the second data transmission and reception device 1350 may transmit the EOM result value to the first data transmission and reception device 1300.

In some embodiments, the first data transmission and reception device 1300 may be a camera module, and the second data transmission and reception device 1350 may be an application processor. In addition, in some embodiments, the first data transmission and reception device 1300 may be a display driver integrated circuit (IC), and the second data transmission and reception device 1350 may be a display panel. In addition, the first data transmission and reception device 1300 and the second data transmission and reception device 1350 may be implemented by being modified into various electronic devices that are not described herein.

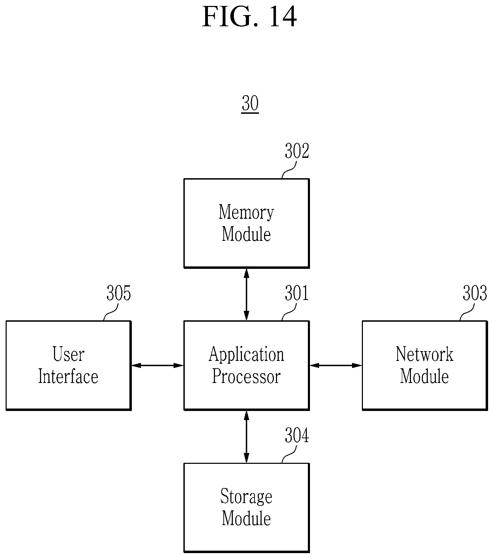

FIG. 14 is a drawing showing a user system applied with a storage system according to an example embodiment.

Referring to FIG. 14, a user system 30 includes an application processor 301, a memory module 302, a network module 303, a storage module 304, and a user interface 305.

The application processor 301 may drive components included in the user system 30 and an operating system (OS). For example, the application processor 301 may include controllers, interfaces, graphic engines, and/or the like for controlling components included in the user system 30. The application processor 301 may be provided as a system-on-chip (SoC).

The memory module 302 may operate as a main memory, an operating memory, a buffer memory, or a cache memory of the user system 30. The memory module 302 may include a volatile random-access memory such as a DRAM, a synchronous DRAM (SDRAM), a double data rate (DDR) SDRAM, a DDR2 SDRAM, a DDR3 SDRAM, a low-power DDR (LPDDR) SDARM, an LPDDR3 SDRAM, an LPDDR3 SDRAM, and/or the like or a non-volatile random-access memory such as PRAM, ReRAM, MRAM, FRAM.

The network module 303 may perform communication with external devices. For example, the network module 303 may support wireless communication such as code-division multiple access (CDMA), Global System for Mobile Communication (GSM), wideband CDMA (WCDMA), CDMA-2000, Time Division Multiple Access (TDMA), long term evolution (LTE), Wimax, WLAN, UWB, Bluetooth, WI-DI. In an embodiment, the network module 303 may be included in the application processor 301.

The storage module 304 may store data. For example, the storage module 304 may store data received from the application processor 301. Alternatively, the storage module 304 may transmit data stored in the storage module 304 to the application processor 301. By way of an example, the storage module 304 may be implemented as a non-volatile semiconductor memory device such as a phase-change RAM (PRAM), a magnetic RAM (MRAM), a resistive RAM (RRAM), a NAND flash, a NOR flash, a three-dimensional NAND flash, and/or the like.

By way of an example, the storage module 304 may correspond to a storage device (e.g., 200 of FIG. 1) described with reference to FIG. 1 to FIG. 9.

The storage module 304 may perform the EOM operation when powered on. For example, the storage module 304 may perform the EOM operation on a signal received from the memory module 302, a signal received from an external device through the network module 303, a signal input from the user interface 305, and/or the like. The storage module 304 may transmit the EOM result value obtained through the EOM operation to the application processor 301 using the AER method. Meanwhile, the EOM result value may include the eye diagram. As described above, the eye diagram may be a graph showing signals according to time offset values on the X-axis and voltage offset values on the Y-axis. Since the eye diagram generally represents magnitudes of signals according to all clock values and all voltage values within a predetermined range, numerous EOM operations may be performed for generating the eye diagram. However, the storage module 304 according to an example embodiment may not perform the EOM operation in response to a request from the host device (e.g., GetLog Page), but may perform the EOM operation when powered on. In addition, the storage module 304 may temporarily store the EOM result value obtained by the EOM operation. Accordingly, the stored EOM result value may be output in response to receiving a signal requesting the EOM result value. Therefore, the EOM result value may be obtained more rapidly when EOM characteristics of the signal received by the storage module 304 is measured. In addition, the storage module 304 may independently change the PHY setting such that the error count becomes a predetermined threshold value or less based on the obtained EOM result value.

In the background art, a storage module transmits only the error count signal EC and error sampling signal (eg the sampling count signal SC) to the host according to the EOM operation, and the eye diagram may be generated by the host based on the error count signal EC and the error sampling signal received from the storage module. However, the storage module 304 according to an example embodiment further includes the EGU unit, and may generate the eye diagram with respect to a signal received from the outside. Accordingly, the storage module 304 may output the EOM result value that includes not only the error count signal EC and the error sampling signal but also the eye diagram. In an embodiment, the storage module 304 may transmit the EOM result value to the host only when the error count exceeds a predetermined threshold value. Therefore, the host does not need to directly generate the eye diagram, and since the EOM result value may be received only when the error count exceeds the predetermined threshold value, the burden of the host may be reduced. In this regard, it is noted that any EOM result value referred to herein may comprise or represent an error count signal, error sampling signal (preferably a sampling count signal) and/or an eye diagram; thus the EOM result value may comprises data such as one or more sub-values. Similarly, it is noted that any EOM result value referred to herein may be transmitted to the host based on the error count, eg only if/when the error count is equal to or greater than a threshold value. It is further noted that references herein such as 'based on being powered-on' are interchangeable with eg 'when powered on', 'if powered on' and 'upon being powered on'.

The user interface 305 may include interfaces that input data or commands in the application processor 301 and/or output data to external devices. By way of an example, the user interface 305 may include user input interfaces such as a keyboard, a keypad, a button, a touch panel, a touch screen, a touch pad, a touch ball, a camera, a microphone, a gyroscope sensor, a vibration sensor, a piezoelectric element, and/or the like. The user interface 305 may include user output interfaces such as a liquid-crystal display (LCD), an organic light-emitting diode (OLED) display device, an active matrix OLED (AMOLED) display device, an LED, a speaker, a motor, and/or the like.

At least one of the components, elements, modules or units described herein may be embodied as various numbers of hardware, software and/or firmware structures that execute respective functions described above, according to an example embodiment. For example, at least one of these components, elements or units may use a direct circuit structure, such as a memory, a processor, a logic circuit, a look-up table, etc. that may execute the respective functions through controls of one or more microprocessors or other control apparatuses. Also, at least one of these components, elements or units may be specifically embodied by a module, a program, or a part of code, which contains one or more executable instructions for performing specified logic functions, and executed by one or more microprocessors or other control apparatuses. Also, at least one of these components, elements or units may further include or implemented by a processor such as a central processing unit (CPU) that performs the respective functions, a microprocessor, or the like. Two or more of these components, elements or units may be combined into one single component, element or unit which performs all operations or functions of the combined two or more components, elements of units. Also, at least part of functions of at least one of these components, elements or units may be performed by another of these components, element or units. Further, although a bus is not illustrated in the block diagrams, communication between the components, elements or units may be performed through the bus. Functional aspects of the above example embodiments may be implemented in algorithms that execute on one or more processors. Furthermore, the components, elements or units represented by a block or processing operations may employ any number of related art techniques for electronics configuration, signal processing and/or control, data processing and the like.

It is noted for completeness that the value dY as referred to herein may be generally an offset value or optionally and more specifically an offset clock value.

We further note that any embodiment disclosed herein may have one or more of the following features or advantages:
- A storage device measures an EOM when the device is power-on without receiving a command from a host and stores an EOM result in a memory;
- When the host requests the EOM result, the device transfers the stored EOM result in an AER manner, which may have the advantage of reducing the time to obtain the EOM result;
- A storage device only sends EOM result(s) to a host when the number of errors exceeds a threshold, and thus may reduce the burden on the host; and/or
- A storage device can change a PHY setting value by itself based on an EOM result.

While this disclosure has been described in connection with example embodiments, it is to be understood that the disclosure is not limited to the disclosed embodiments, but, on the contrary, is intended to cover various modifications and equivalent arrangements included within the scope of the appended claims.

## Claims

1. A storage system, comprising:
a host device; and
a storage device configured to, based on being powered-on, perform an eye open monitor (EOM) operation with respect to a signal received from the host device to generate an EOM result value, configured to store the EOM result value in a buffer memory, and configured to output the EOM result value within the buffer memory to the host device in response to receiving an asynchronous event request (AER) command from the host device.

2. The storage system of claim 1, wherein the storage device comprises:
an equalizer configured to adjust a gain of the received signal to generate equalized serial bits;
a clock data recovery (CDR) block configured to use the equalized serial bits to recover the received signal; and
an analog front end (AFE) controller configured to generate an AFE control signal for controlling the equalizer based on the EOM result value.

3. The storage system of claim 2, wherein the equalizer includes a continuous time linear equalizer (CTLE) and a decision feedback equalizer (DFE), and
wherein the AFE control signal is a signal for controlling at least one of a gain of the CTLE or a gain of the DFE.

4. The storage system of claim 2 or 3, wherein the EOM operation comprises:
inputting the equalized serial bits into a main path, to obtain a first output based on a reference condition, the reference condition including a reference clock and a reference voltage;
inputting the equalized serial bits into an EOM path while changing an offset clock and an offset voltage, to obtain a second output; and
comparing the first output and the second output.

5. The storage system of claim 4, wherein the main path comprises:
a clock recovery circuit configured to generate the reference clock based on the equalized serial bits,
a first slicer configured to extract data of the equalized serial bits based on the reference condition, and
a first deserializer configured to generate the first output by deserializing the data of the equalized serial bits extracted based on the reference condition.

6. The storage system of claim 4, wherein the EOM path comprises:
a multiplier configured to receive the reference clock from a clock recovery circuit and generate an EOM clock by reflecting the offset clock;
a second slicer configured to extract data of the equalized serial bits based on the EOM clock and the offset voltage;
a second deserializer configured to generate the second output by deserializing the extracted data of the equalized serial bits; and
a comparator configured to compare the first output and the second output.

7. The storage system of any one of claims 2 to 6, wherein the CDR block further comprises:
an EOM block configured to generate an error count signal based on a count of an error between the first output and the second output and generate a sampling count signal based on a count of comparison between the first output and the second output; and
an eye diagram generation unit (EGU) configured to generate an eye diagram showing signals according to a clock and a voltage, based on the error count signal and the sampling count signal, and
wherein the EOM result value comprises at least one of the error count signal or the eye diagram.

8. The storage system of claim 7, wherein the AFE control signal causes the count of the error to have a predetermined threshold value or less.

9. The storage system of claim 7 or 8, wherein the storage device is further configured to transmit the EOM result value to the host device based on the count of the error being equal to or greater than a predetermined threshold value.

10. A method of operating a storage system, the method comprising:
performing, by a storage device based on being powered-on, an eye open monitor (EOM) operation with respect to a received signal, to generate an EOM result value;
receiving an asynchronous event request (AER) command from a host device; and
transmitting the EOM result value to the host device.

11. The method of claim 10, wherein the storage device further comprises a buffer memory,
wherein the performing comprises storing the EOM result value in the buffer memory, and
wherein the transmitting comprises transmitting the EOM result value stored in the buffer memory to the host device.

12. The method of claim 10 or 11, wherein the performing comprises:
inputting the received signal into a main path, to obtain a first output based on a reference condition, the reference condition comprising a reference clock and a reference voltage;
setting an offset value, the offset value comprising an offset clock and an offset voltage;
inputting the received signal into an eye open monitor (EOM) path, to obtain a second output by using a predetermined offset value, which changes within a predetermined range with respect to the set offset value;
determining whether the EOM operation is performed with respect to all offset values within the predetermined range; and
generating the EOM result value based on a determination that the EOM is performed with respect to all offset values.

13. The method of claim 12, wherein the storage device comprises an equalizer configured to adjust a gain of the received signal to generate equalized serial bits, and a CDR block configured to use the equalized serial bits to recover the received signal, and
wherein the method further comprises generating an analog front end (AFE) control signal for controlling the equalizer based on the EOM result value.

14. The method of claim 13, wherein the equalizer comprises a continuous time linear equalizer (CTLE) and a decision feedback equalizer (DFE), and
wherein the generating the AFE control signal comprises:
changing a PHY setting based on the EOM result, the PHY setting comprising a gain of at least one of the CTLE or the DFE;
performing the EOM operation based on the changed PHY setting, to determine whether a count of an error between the first output and the second output while changing the offset clock and the offset voltage is a predetermined threshold value or less; and
generating the AFE control signal based on the changed PHY setting based on a determination that the count of the error is the predetermined threshold value or less.

15. The method of any one of claims 12 to 14, further comprising:
transmitting the EOM result value to the host device based on a count of an error, between the first output and the second output while changing the offset clock and the offset voltage, being a predetermined threshold value or more.
